# EUROPEAN PATENT SPECIFICATION

(11) **EP 2 053 161 B1**
(45) Date of publication and mention of the grant of the patent: **16.05.2012**
(21) Application number: 07792674.9
(22) Date of filing: 09.08.2007
(51) Int. Cl.: D06M 15/693, B60R 21/16, C08K 5/5425, C08L 83/05, C08L 83/07, D06M 11/79, D06M 13/224, D06M 13/513, C08L 83/04, C09D 183/04, D06M 15/643

(54) **SILICONE RUBBER COMPOSITION FOR FABRIC COATING AND COATED FABRIC**
SILICONGUMMIZUSAMMENSETZUNG ZUM BESCHICHTEN EINES TEXTILEN FLÄCHENGEBILDES SOWIE BESCHICHTETES TEXTILES FLÄCHENGEBILDE
COMPOSITION DE CAOUTCHOUC SILICONE POUR L'ENDUCTION DE TISSU ET TISSU ENDUIT

(30) Priority: 14.08.2006 JP 2006221238
(43) Date of publication of application: 29.04.2009
(73) Proprietor: Dow Corning Toray Co., Ltd., Tokyo 100-0005 (JP)
(72) Inventor: NOZOE, Tsugio, Dow Corning Toray Co., Ltd., Ichihara-shi, Chiba 2990108 (JP); TSUJI, Yuichi, Dow Corning Toray Co., Ltd., Ichihara-shi, Chiba 2990108 (JP); YAMAMOTO, Shinichi, Dow Corning Toray Co., Ltd., Ichihara-shi, Chiba 2990108 (JP)
(74) Representative: Gillard, Richard Edward
(86) International application number: PCT/JP2007/066058
(87) International publication number: WO 2008/020635

(56) References cited:
- EP-A1- 0 718 432
- EP-A2- 0 497 349
- JP-A- 08 209 068
- JP-A- 2003 278 083
- JP-A- 2003 507 588
- JP-A- 2005 506 437
- JP-A- 2006 348 410
- JP-A- 2007 070 626
- JP-A- 2007 186 596

## Description

### Technical Field

The present invention relates to a silicone-rubber composition suitable for coating textile fabrics, to textile fabrics coated with the composition, and to a method of manufacturing coated textile fabrics. More specifically, the invention relates to a silicone-rubber composition suitable for forming a coating layer, which strongly adheres to the surface of a hard-to-adhere textile material such as a hollow woven textile fabric and which after coating is capable of maintaining strong adherence of the coating to the fabric even after long-time exposure of the coated fabric to high temperature and high humidity. The invention also relates a method of manufacturing the last-mentioned fabric and to the coated fabric *per se.*

### Background Art

Silicone-rubber compositions for coating textile fabrics with silicone rubber are used for manufacturing, e.g., vehicle airbags. However, when conventional silicone-rubber compositions of this type are applied onto hard-to-adhere materials such as a hollow woven textile fabric, they do not provide sufficient adhesive strength of the coating layer to the fabric and are subject to peeling from the fabric substrate after long use and storage.

Furthermore, the use of conventional textile fabrics coated with silicone rubber encounters a problem. More specifically, after long-time exposure of such a product to high temperature and high humidity, the strength of adhesion of the coating layer to the fabric becomes lower than the adhesion directly after manufacturing. On the other hand, in the case of a vehicle airbag it is required that even after prolonged storage in a folded state the bag should reliably expand and maintain its function of holding a pressurized gas.

Japanese Unexamined Patent Application Publication (hereinafter referred to as "Kokai") 2006-2093 discloses a curable organopolysiloxane composition that contains thermoplastic resin particles, which include a specific organometallic compound.

Kokai H08-209068 discloses a hydrosilylation-curable coating composition containig: an alkoxysilane that contains an epoxy group, an organic titanium compound, a metal chelate compound, and an alkenyl-functional polyorganosiloxane terminated with silanol groups as adhesion promoters.

Kokai H09-87585 discloses a hydrosilylation-curable liquid silicone-rubber composition for coating textile fabrics comprising an organopolysiloxane resin, an epoxy-containing organosilicon compound, and an organotitanium compound.

Kokai 2002-88307 discloses a coating composition for coating a fibrous substrate comprising an alkoxysilane, water, and a metal complex.

Kokai 2005-82669 discloses a silicone-rubber composition for airbags which is curable with an addition reaction or with an organic peroxide and which comprises an organosilicon compound that contains an ureido group in one molecule, or an isocyanuric acid ester modified with an organosilicon compound, and a hydrolyzation and condensation product of the latter.

However, when the above-described compounds are used for forming coating layers on hard-to-adhere materials such as a hollow woven textile fabric, they do not provide sufficient adhesion of the coating layer to the fabric, and their adhesive properties are reduced when the coated fabric is held under conditions of high temperature and high humidity.

### Disclosure of Invention

The present invention is aimed at a solution of the problems of the prior art, and it is an object of the presnt invention to provide a silicone-rubber composition that can form on the surface of a hard-to-adhere textile fabric, such as a hollow woven textile fabric, a coating layer that strongly adheres to the fabric and that is suitable for use in manufacturing a coated fabric with a coating layer capable of maintaining strong adhesion to the fabric even after retaining the coated fabric over a long time under conditions of high temperature and high humidity. It is another object to provide a textile fabric coated with the above silicone-rubber composition.

The above objects are achieved by means of
[1] A silicone-rubber composition for coating textile fabrics characterized in that the silicone-rubber composition is a solventless hydrosilylation reaction-curable composition, has a viscosity at 25°C in the range of 100 to 500 Pa·s, and contains an alkoxysilane that contains a methacrylic group or an acrylic group, reinforcing fine silica powder having a specific surface area equal or greater than 50 m²/g and a zirconium chelate compound, but does not contain an organic titanium compound; or the aforementioned silicone-rubber composition for coating textile fabrics that further includes an alkoxysilane that contains an epoxy group;
[2] the silicone-rubber composition for coating textile fabrics according to item [1] that comprises the following components:
   100 parts by mass of an alkenyl group-containing organopolysiloxane (A) that contains in one molecule at least two alkenyl groups and has a viscosity at 25°C in the range of 100 to 1,000,000 mPa·s;
   an organohydrogenpolysiloxane (B) (which is used in such an amount that the mole ratio of silicon-bonded hydrogen atoms of component (B) to alkenyl groups of component (A) ranges from (0.7 : 1.0) to (5.0 : 1.0));
   a hydrosilylation catalyst (C) (used in an amount sufficient for curing the composition);
   0.1 to 50 parts by mass of a finely divided reinforcing silica (D) having a specific surface area equal or greater than 50 m²/g;
   0.1 to 2 parts by mass of an alkokysilane that contains a methacry group or an acryl group (E); and
   0.01 to 0.5 parts by mass of a zirconium chelate compound (F).
[3] the silicone-rubber composition for coating textile fabrics according to item [2] that further includes an alkoxysilane that contains an epoxy group (in an amount of 0.1 to 2 parts by mass for 100 parts by mass of component (A));
[4] a textile fabric coated with the silicone-rubber composition for coating textile fabrics according to items [1], [2], or [3];
[5] the textile fabric of item [4], wherein the textile fabric has a hollow woven structure;
[6] the textile fabric according to items [4] or [5] used as a material for an airbag;
[7] a method of manufacturing a coated textile fabric comprising the steps of applying the silicone-rubber composition for coating textile fabrics according to items [1], [2], or [3] onto a textile fabric, and then forming a silicone-rubber coating layer by curing the aforementioned composition on the textile fabric;
[8] the method of manufacturing a coated textile fabric according to item [7], wherein the textile fabric has a hollow woven structure.

The silicone-rubber composition of the present invention forms on a hard-to-adhere-fabric, such as an hollow woven textile fabric, a coating layer that strongly adheres to the fabric. This coating layer can maintain its strong adhesion to the fabric even after long-time exposure of the coated fabric to conditions of high temperature and high humidity. The coated fabric of the presnt invention is characterized by a provision of a coating layer that strongly adheres to the fabric and that maintains this strong adhesion even after long-time exposure of the coated fabric to conditions of high temperature and high humidity. The method of the presnt invention for manufacturing a coated fabric is characterized by high efficiency of the manufacturing process.

### Best Mode for Carrying Out the Invention

The silicone-rubber composition of the presnt invention contains an alkoxysilane that contains a methacrylic group or an acrylic group, reinforcing fine silica powder having a specific surface area equal or greater than 50 m²/g and a zirconium chelate compound but does not contain an organic titanium compound. Furthermore, this composition is a solventless type composition curable by means of a hydrosilylation reaction and has a viscosity at 25°C in the range of 100 to 500 Pa·s.

The alkoxysilane that contains a methacrylic group or an acrylic group is an indispensable component of the composition which imparts to the composition a property of strong adhesion to a hard-to-adhere fabric such as a hollow woven textile fabric. The alkoxysilane that contains a methacrylic group or an acrylic group can be one known in the art. Specific examples of this compound are the following: methacryloxymethyl-trimethoxysilane, 3-methacryloxypropyl-tirmethoxysilane, 3-methacryloxypropylmethyldimethoxysilane, 3-methacryloxypropyl-dimethylmethoxysilane, 3-methacryloxypropyl-triethoxysilane, 3-methacryloxypropyl-methyldiethoxysilane, 3-methacryloxyisobutyl-trimethoxysilane, or a similar methacryloxy-substituted alkoxysilane; 3-acryloxypropyl-trimethoxysilane, 3-acryloxypropyl-methyldimethoxysilane, 3-acryloxypropyl-dimethyl-methoxysilane, 3-acryloxypropyl-triethoxysilane, or a similar acryloxy-substituted alkyl-containing alkoxysilane.

The zirconium chelate compound is a component that imparts to the composition better adhesion to hard-to-adhere fabrics such as a hollow woven textile fabric and that allows the composition to preserve this property even after long-term exposure of the fabric, formed by coating with the coating layer of the aforementioned composition and curing, to conditions of high temperature and high humidity. Such zirconium chelate compositions are known in the art and can be represented by the following specific examples: zirconium (IV) tetraacetylacetonate, zirconium (IV) hexafluoracetylacetonate, zirconium (IV) trifluoroacetylacetonate, tetrakis (ethyltrifluoroacetylacetonate) zirconium, tetrakis (2,2,6,6-tetramethyl-heptanedionato) zirconium, zirconium (IV) dibutoxy bis(ethylacetonate), diisopropoxy bis (2,2,6,6-tetramethyl-heptanedionato) zirconium, or similar zirconium complexes having β -diketones (including alkyl-substituted and fluoro-substituted forms thereof) which are used as ligands. Among these, most preferable compounds are zirconium complexes of acetylacetonate (including alkyl-substituted and fluoro-substituted forms).

In addition to this, it is preferable to further combine the composition with an alkoxysilane that contains an epoxy group. In combination with the aforementioned methacryl- or acryl-containing alkoxysilane and the zirconium chelate, this epoxy-containing alkoxysilane also contributes to improve in adhesion to hard-to-adhere textile fabrics such as a hollow woven textile fabric. The aforementioned epoxy-containing alkoxysilanes are known in the art and can be represented by the following specific compounds: 3-glycidoxypropyl trimethoxysilane, 3-glycidoxypropyl triethoxysilane, 3-glycidoxypropyl methyldimethoxysilane, 4-glycidoxybutyl trimethoxysilane, 5,6-epoxyhexyl triethoxysilane, 2-(3,4-epoxycyclohexyl) ethyltrimethoxysilane, or 2-(3,4-epoxycyclohexyl) ethyltriethoxysilane.

The composition of the presnt invention is further characterized by being free of titanium organic compounds. If the composition is compounded with an organic titanium compound, this will impair adhesion of the composition to hollow woven textile fabric and will further worsen this property if the fabric coated with a cured layer of the composition is exposed for a long time to conditions of high temperature and humidity.

Examples of the organic titanium compounds are the following: tetraisopropyl titanate, tetrabutyl titanate, tetraoctyl titanate, or a similar organic titanic acid ester; titanium acetate or a similar organic titanium acid salt; diisopropoxy bis(acetylacetonate) titanium, diisopropoxy bis(acetoacetic-acid ester) titanium, or a similar titanium chelate compound.

The composition of the presnt invention has a viscosity at 25°C in the range of 100 to 500 Pa·s and comprises a hydrosilylation reaction-curable solventless liquid silicone rubber composition which does not need a solvent for viscosity adjustment. An advantage of such a composition is that it is extremely convenient for handling in application thereof onto the surfaces of textile fabrics, improves productivity, and hinders formation of defects in the coating layer.

The following is a detailed description of preferred embodiments of the composition of the presnt invention.
Alkenyl group-containing organopolysiloxane (A) is one of the main components of the composition of the present invention. This component contains in one molecule at least two alkenyl groups. It is preferable if component (A) has a linear molecular structure. However, within the limits that are not in contradiction with the objects of the presnt invention, component (A) may have a partially branched molecular structure, or may comprise a mixture of alkenyl group-containing organopolysiloxanes having cyclic, branched, net-like, or dendritic molecular structures. There are no special restrictions with regard to viscosity of component (A) at 25°C, but it may be recommended that this component has a viscosity ranging from 100 to 1,000,000 mPa·s, and preferably from 300 to 100,000 mPa·s. From the viewpoint of lowering viscosity and improving physical properties, it is recommended that the content of alkenyl groups in component (A) is in the range of 0.02 to 1.9 mass %.

The alkenyl groups can be represented by vinyl, allyl, butenyl, pentenyl, hexenyl, and heptenyl groups, of which vinyl groups are preferable. Furthermore, silicon-bonded organic groups other than alkenyl groups contained in component (A) may be exemplified by methyl, ethyl, propyl, butyl, pentyl, hexyl, or similar alkyl groups; phenyl, tolyl, xylyl, or similar aryl groups; or 3-chloropropyl, 3,3,3-trifluoropropyl, or similar halogen-substituted groups. Most preferable are methyl and phenyl groups. Furthermore, a small amount of hydroxyl groups, methoxy, ethoxy, or similar alkoxy groups can be contained on molecular terminals of component (A).

Specific example of component (A) are the following: a dimethylpolysiloxane capped at both molecular terminals with dimethylvinylsiloxy groups; a copolymer of a methylvinylsiloxane and a dimethylsiloxane capped at both molecular terminals with dimethylvinylsiloxy groups; a copolymer of a methylvinylsiloxane and a dimethylsiloxane capped at both molecular terminals with trimethylsiloxy groups; the aforementioned organopolysiloxanes in which a part or all methyl groups are substituted with ethyl, propyl, or similar alkyl groups; phenyl groups, tolyl groups, or similar aryl groups; organopolysiloxanes substituted with 3,3,3-trifluoropropyl, or similar halogenated alkyl groups; or mixture of two or more of the aforementioned compounds. From the viewpoint of ease in obtaining reduced viscosity and improved physical properties, most preferable is the dimethylpolysiloxane capped at both molecular terminals with dimethylvinylsiloxy groups.

Component (B) is curing agent in the form of an organohydrogenpolysiloxane that contains in one molecule on average two silicon-bonded hydrogen atoms. When this component is used in the presence of component (C), described below, it reacts with component (A) and cross-links the composition. There are no special restrictions with regard to the molecular structure of component (B) that may have a linear, branched, cyclic, or a three-dimensional net-like molecular structure. There are no special restrictions with regard to viscosity of component (A) at 25°C, but it may be recommended that this component has a viscosity ranging from 1 to 100,000 mPa·s. Silicon-bonded organic groups used in component (B) may be exemplified by methyl, ethyl, propyl, butenyl, pentenyl, hexyl, or similar alkyl groups; phenyl, tolyl, xylyl, or similar aryl groups; 3-chloropropyl, 3,3,3-trifluoropropyl, or similar halogenated alkyl group, preferable of which are methyl and phenyl groups.

It is recommended that component (B) is used in such an amount that the ratio of the mole number of silicon-bonded hydrogen atoms of component (B) to the mole number of alkenyl groups of component (A) ranges from (0.7 : 1.0) to (5.0 : 1.0), preferably from (0.9 : 1.0) to (2.5 : 1.0), and most preferably from (0.9 : 1.0) to (2.0 : 1.0). If the content of component (B) is below the recommended lower limit, this may either not provide a sufficient degree of curing of the composition or sufficient strength of adhesion of the composition of the coating layer to the textile fabric. If, on the other hand, component (B) is used in an amount exceeding the recommended upper limit, this may impair post-curing physical properties of the coated product, e.g., elongation.

Component (B) can be exemplified by the following compounds: a methylhydrogenpolysiloxane capped at both molecular terminals with trimethylsiloxy groups; a copolymer of methylhydrogensiloxane and dimethylsiloxane capped at both molecular terminals with trimethylsiloxy groups; dimethylsiloxane capped at both molecular terminals with dimethylhydrogensiloxy groups; a copolymer of methylhydrogensiloxane and dimethylsiloxane capped at both molecular terminals with dimethylhydrogensiloxy groups; a copolymer of methylhydrogensiloxane and methylphenylsiloxane capped at both molecular terminals with dimethylphenylsiloxy groups; a cyclic methylhydrogenpolysiloxane; a copolymer consisting of (CH₃)₂HSiO_{1/2} siloxane units and SiO_{4/2} units; a copolymer consisting of (CH₃)₂HSiO_{1/2} siloxane units, (CH₃)₃SiO_{1/2} siloxane units, and SiO_{4/2} units, the aforementioned organopolysiloxanes in which a part or all methyl groups are substituted with ethyl, propyl, or similar alkyl groups; phenyl, tolyl, or similar aryl groups; 3,3,3-trifluoropropyl, or similar halogenated alkyl groups; or a mixture of two or more of the aforementioned organopolysiloxanes.

Hydrosilylation catalyst (C) is used for accelerating a hydrosilylation reaction between the alkenyl groups of component (A) and the silicon-bonded hydrogen atoms of component (B). A preferable component (C) is a platinum-system catalyst which is efficient in its catalytic action and is relatively easily available. Such a catalyst can be exemplified by the following substances: a finely powdered platinum; a chloroplatinic acid or an alcohol solution of a chloroplatinic acid; an olefin complex of a chloroplatinic acid; a complex of a chloroplatinic acid and an alkenylsiloxane; a platinum-diketone complex; metallic platinum on silica, alumina, carbon or a similar carrier; or a thermoplastic resin powder that contains a platinum compound. The catalysts other than those belonging to the platinum-base group can be exemplified by rhodium, ruthenium, iridium, or palladium compounds. For example, these catalysts can be represented by the following formulas: RhCl(PPh₃)₃, RhCl(CO)(PPh₃)₂, Ru₃(CO)₁₂, IrCl(CO)(PPh₃)₂, and Pd(PPh₃)₄ (where Ph stands for a phenyl group).

In general component (C) should be added in an amount of 0.1 to 500 parts by mass, preferably 1 to 50 parts by mass of metallic platinum for 10⁶ parts by mass of component (A). If the added amount of component (C) is below the recommended lower limit, the reaction mayl not have a sufficient progress, and if, on the other hand, the added amount exceeds the recommended upper limit, this may be economically unjustifiable.

Reinforcing fine silica powder (D) is a component which is added for improving the mechanical strength of a molded silicone rubber product obtained by curing the aforementioned addition-curable liquid silicone-rubber composition. This component can be exemplified by dry-process silica, precipitated silica, or the aforementioned silica having its surface hydrophobically treated, e.g., with an organic silicon compound. It is recommended that the specific surface area of this reinforcing fine silica powder be equal to or exceed 50 m²/g. The reinforcing fine silica powder can be added to the composition in an amount of 0.1 to 50 parts by mass, preferably 5 to 40 parts by mass for 100 parts by mass of component (A).

An alkoxysilane that contains a methacryl group or an acryl group (E) is a component that imparts to the composition improved adhesion to hard-to-adhere materials such as hollow woven textile fabric. These alkoxysilane that contains a methacryl group or an acryl group can be exemplified by the same compounds that have been mentioned earlier. It is recommended that component (E) is added to the composition in an amount of 0.1 to 2 parts by mass, preferably 0.5 to 2 parts by mass for 100 parts by mass of component (A). If component (E) is added in an amount less than the recommended lower limit, the improvement in adhesion to hard-to-adhere materials may be insufficient, and if, on the other hand, the added amount exceeds the recommended upper limit, this may change the color of the coating layer.

Zirconium chelate compound (F) is a component that imparts to the composition a property of better adherence to hard-to-adhere materials such as an hollow woven textile fabric. Furthermore, this component allows the coating layer, which is formed after curing the composition applied onto the fabric, to maintain strong adhesion to the fabric even after long-time exposure to conditions of high temperature and high humidity. The zirconium chelate compounds can be represented by the same examples as given above. It is recommended that component (F) is added in an amount ranging from 0.01 to 0.5 parts by mass, preferably 0.05 to 0.5 parts by mass, for 100 parts by mass of component (A). If component (F) is used in an amount less that the recommended lower limit, this either may not provide sufficiently strong adhesion of the cured composition to a hard-to-adhere material such as an hollow woven textile fabric, or may not allows the coating layer, which is formed after curing the composition applied onto the fabric, to maintain strong adhesion to the fabric after long-time exposure to conditions of high temperature and high humidity. On the other hand, if the content of component (F) exceeds the recommended upper limit, this may either impair physical properties of a cured product of the composition, or may change the color of the silicone-rubber layer obtained after curing the composition applied onto the fabric.

Adherence of the composition to hard-to-adhere materials such as an hollow woven textile fabric can be further improved if aforementioned components (E) and (F) are further combined with an alkoxysilane that contains an epoxy group (G). Appropriate alkoxysilane that contains an epoxy group (G) can be exemplified by the same compounds as mentioned earlier. This component can be added in an amount of 0.1 to 2 parts by mass, preferably 0.5 to 2 parts by mass, for 100 parts by mass of component (A).

In order to improve storage stability or industrial handleability, the composition may incorporate such compounds as 3,5-dimethyl-1-hexyn-3-ol, 3,5-dimethyl-1-octyn-3-ol, 2-phenyl-3-butyn-2-ol, or similar acetylene-based compounds; 3-methyl-3-penten-1-yne, 3,5-dimethyl-3-hexen-1-yne, or a similar enyne compound; benzotriazol, or similar triazol compounds; phosphine, mercaptane, hydrazine, or similar curing retarding agents. There are no special restrictions with regard to amounts in which these compounds can be used, but in general they should be added in an amount of 0.001 to 5 parts by mass for 100 parts by mass of component (A). Most preferably, the curing retarding agents should be added in an amount ranging from 0.01 to 10 parts by mass for 100 parts by mass of component (A).

In order to improve physical properties of a cured product, the composition may be further combined with 1,3,5,7-tetramethyl-l,3,5,7-tetravinyl cyclotetrasiloxane, 1,3,5,7-tetramethyl-1,3,5,7-tetrahexenyl cyclotetrasiloxane, methylvinylsiloxane capped at both molecular terminals with dimethylhydroxysiloxy groups, a copolymer of dimethylsiloxane and methylvinylsiloxane capped at both molecular terminals with dimethylhydroxysiloxy groups, methylvinylsiloxane oligomer capped at both molecular terminals with trimethylsiloxy groups, or a similar organopolysiloxane compound that contains vinyl groups in one molecule in an amount of 5 mass % or more. These organopolysiloxanes can be added in an amount of 0.1 to 1 part by mass for 100 parts by mass of component (A). Although there are no special restrictions with regard to viscosity of the aforementioned organopolysiloxanes, it is recommended to have viscosity in the range of 0.5 to 50 mPa·s.

Within the limits which are not in contradiction with the objects of the presnt invention, the composition may be further combined with an organopolysiloxane consisting of (CH₃)₂ViSiO_{1/2} siloxane units and SiO_{4/2} siloxane units (where Vi stands for vinyl groups), an organopolysiloxane consisting of (CH₃)₃SiO_{1/2} siloxane units, (CH₃)₂ ViSiO_{1/2} units, and SiO_{4/2} siloxane units (where Vi stands for vinyl groups), or other conventional additives to silicone rubber compositions such as quartz powder, diatomaceous earth, calcium carbonate, magnesium carbonate, or similar weight-increasing fillers; a cerium oxide, cerium hydroxide, iron oxide, or similar heat-resistant additives; Bengala, titanium oxide, carbon black, or similar pigments; a flame retarder; and an organopolysiloxane resin that does not have alkenyl groups and does not have a softening point.

There are no special restrictions with regard to the method suitable for the preparation of the silicone-rubber composition of the presnt invention, and the composition can be prepared by mixing components (A) through (E), if necessary, with other arbitrary components. However, a silica master batch can be first prepared by heating and mixing a part of component (A) with component (D) and then adding to this master batch the remaining part of component (A) and components (B), (C), and (E). If the composition contains arbitrary components, they can be admixed with other components during the preparation of the silica master batch, and if heating and mixing of these arbitrary components changes their properties, preferably, they can be combined with the silica master batch together with the remaining part of component (A) and components (B), (C), and (E). Furthermore, when preparing the silica master batch, the aforementioned organic silicon compound can be added, and component (D) can be surface-treated *in-situ.* The composition can be prepared by using a two-roll mill, a kneader-mixer, Ross mixer, or any other conventional kneading or mixing equipment.

For better storage stability, the silicone-rubber composition of the presnt invention may comprise a two-part liquid silicone-rubber composition which consists of a composition (I) that contains components (A), (C), and (D) without component (B) and a composition (II) that consists of component (A), (B), and (D) without component (C). Component (E) can be mixed either with composition (I) or with composition (II).

A coated textile fabric of the presnt invention is a textile fabric coated with the composition of the present invention. This fabric may comprise Nylon 6, Nylon 66, Nylon 46, or a similar polyamide-fiber textile fabric; polyethylene-terephthalate, polybutylene-terephthalate, or a similar polyester-fiber textile fabric; polyacrylonitrile-fiber textile fabric, aramid-fiber textile fabric, polyether-imide fiber textile fabric, polysulfone-based-fiber textile fabric, carbon-fiber textile fabric, rayon-fiber textile fabric, polyethylene-fiber textile fabric, or a non-woven fabric made from the aforementioned fibers. Among the above fabrics, most preferable from the viewpoint of low cost and strength are polyamide-fiber textile fabrics or polyester-fiber textile fabrics.

Although there are no special restrictions with regard to the fabric structure, for the sake of better productivity and desired thickness, normally this should be a flat textile fabric. Since the composition of the presnt invention is suitable for forming a coating layer having strong adhesion to hard-to-adhere materials, it is recommended to use the composition for application on such a hollow woven textile fabric which has an envelope woven into that the fabric structure. It should be noted that one of the factors that determines difficulty of adhesion to a hollow woven textile fabric is a complicated texture of the hollow woven textile fabric. Therefore it is necessary to check that prior to application of a coating the fabric was carefully washed and completely dried.

A method of application of the silicone-rubber composition of the present invention onto the textile fabric may comprise spraying, gravure coating, bar coating, knife coating, patting, screen printing, dipping, or any other conventional processes. The coating amount of the composition may be in the range of 25 to 150 g/m². Curing of the composition applied onto the textile fabric may be carried out at a temperature of 150 to 200°C and the curing time at that temperature is about 1 to 2 min.

Normally, the fabric coating layer of the composition of the presnt invention comprises a single layer. If necessary, however, an arbitrary number of layers can be formed on the fabric. Such additional layers are applied either for improving tactile sensation, for improving wear-resistant properties of the material, or for improving strength of the coated product. The additional coating layer may be exemplified by a plastic film, a woven fabric, non-woven fabric, or a layer from any other elastic coating material.

### Examples

The invention will be further described with reference to practical examples, wherein all parts are parts by mass and all viscosities are measured at 25°C. In the examples, Me designates methyl groups, and Vi designates vinyl groups.

### [Method for Measuring Physical Properties of Silicone Rubber]

A 2 mm-thick cured silicone rubber specimen was produced by subjecting the silicone-rubber composition to press curing for 5 min. at 150°C under a pressure of 20 MPa. Hardness of the silicone rubber was measured by type A durometer in accordance with JIS K6253. Tensile strength and elongation were measured in accordance with JIS K6251. Furthermore, the stress that occurred at 100% elongation was measured as 100% modulus in accordance with JIS 6251.

### [Method for Measuring Adhesive Durability]

A piece of Nylon 66 fabric having a hollow woven structure, a warp density of 46 threads/inch, and a weft density of 46 threads/inch was coated with a 50 µm-thick layer of the silicone-rubber composition, and a silicone-rubber-coated fabric was formed by holding the fabric coated with the composition for 2 min. in a heating furnace at 170°C. The obtained silicon-rubber-coated fabric was subjected to 1000 loading cycles using a Scott crumple tester in accordance with JIS K6404-6 with a load of 1 kgf, and then the condition on the surface of the silicone-rubber-coating layer was observed. The surface which did not contain any changes was evaluated with grade 5, the surface that contained slight stripe-like marks was evaluated with grade 4, the fabric with slight and partial peeling of the silicone-rubber-coating layer was evaluated with grade 3, the fabric with noticeable partial peeling of the silicone-rubber-coating layer was evaluated with grade 2, and the fabric with significant peeling of the silicone-rubber-coating layer over the entire surface of the fabric was evaluated with grade 1. The same adhesive durability test by using a Scott tester was conducted and the same evaluations criteria were used as those mentioned before for a silicone-rubber-coated fabric manufactured by the same method as described above but after retaining the fabric for 10 days under conditions of 80°C temperature and 95% Rh humidity.

### [Color Change of the Coated Fabric]

Visual observation was made whether a yellow-brown color appeared in the coating layer formed on the surface of the fabric from the composition of the presnt invention. The coated fabric passes the test if the coloring was not observed, and does not pass the test if the coloring was observed.

### [Manufacturing Example 1]

A Ross mixer was filled with the following components: 100 parts of a dimethylpolysiloxane, which is capped at both molecular terminals with dimethylvinylsiloxy groups and has a viscosity of 40,000 mPa·s; 40 parts of fumed silica having a BET specific area of 225 m²/g; 7 parts ofhexamethyl disilazane; 2 parts of water; and 0.2 parts of a copolymer of a dimethylsiloxane and a methylvinylsiloxane, which is capped at both molecular terminals with dimethylhydroxysiloxy groups and has a viscosity of 20 mPa·s s (10.9 mass % content of vinyl groups). After the components were mixed to uniformity at room temperature the obtained mixture was heat treated for 2 hours at 200°C under a reduced pressure, whereby a flowable Silica Master Batch 1 was produced.

Given below are designations and quantities of materials used as composition components in the subsequent comparative and practical examples.

### (1) Silica Master Batches

Silica master batch prepared in Manufacturing Example 1. This batch contains the following components described below: 71 part of constituent (a-1), 0.1 parts of the vinylsiloxane oligomer, and 29 parts of component (D), which is a fumed silica, for 100 parts of the silica master batch.

### (2) Component (A)

(a-1): a dimethylpolysiloxane that has a viscosity of 40,000 mPa·s and is capped at both molecular terminals with dimethylvinylsiloxy groups; content of vinyl groups is about 0.09 mass %.
(a-2): a dimethylpolysiloxane that has a viscosity of 2,000 mPa·s and is capped at both molecular terminals with dimethylvinylsiloxy groups; content of vinyl groups is about 0.23 mass %.
(a-3): a copolymer of methylvinylsiloxane and dimethylsiloxane that has a viscosity of 350 mPa·s and is capped at both molecular terminals with dimethylvinylsiloxy groups; content of vinyl groups is about 1.17 mass %.

### (3) Component (B)

(b-1): a copolymer of methylhydrogensiloxane and dimethylsiloxane that has a kinematic viscosity of 5.5 mm²/s and is capped at both molecular terminals with trimethylsiloxy groups; content of silicon-bonded hydrogen atoms is about 0.73 mass %.
(b-2): a dimethylpolysiloxane that has a kinematic viscosity of 9.5 mm²/s and is capped at both molecular terminals with dimethylhydrogensiloxy groups; content of silicon-bonded hydrogen atoms is about 0.16 mass %.

### (4) Component (C)

Platinum-system catalyst: a 1,3-divinyltetramethyldisiloxane solution of a platinum complex of 1,3-divinyltetramethyldisiloxane; content of metallic platinum is about 4000 ppm.

### (5) Adhesion Promoter

Adhesion promoters AD-1 to AD-10 were prepared by uniformly mixing various components in proportions given in Table 1. Designations and quantities of the appropriate components shown in Table 1 are given below.

### Component (E)

E: 3-methacryloxypropyl trimethoxysilane

### Component (F)

f-1: tetraacetylacetonate zirconium (trademark: Orgatix ZC-150; supplied by Matsumoto Seiyaku Kogyo Co., Ltd.)

f-2: tetrakis (ethyltrifluoroacetylacetate) zirconium

Component (G) 3-glycidoxypropyl trimethoxysilane

Other organic metal compounds
m-1: zirconium acetate (trademark: Orgatix B-115; supplied by Matsumoto Seiyaku Kogyo Co., Ltd.)
m-2: aluminum complex (trademark: Orgatix AL135; supplied by Matsumoto Seiyaku Kogyo Co., Ltd.)
m-3: titanium lactate (trademark: Orgatix TC-310; supplied by Matsumoto Seiyaku Kogyo Co., Ltd.)
m-4: tetraisopropyl titanate (trademark: Orgatix TA-10; supplied by Matsumoto Seiyaku Kogyo Co., Ltd.)

### (6) Additives

Curing inhibitor: 3,5-dimethyl-1-octyn-3-ol

Silicone resin: organopolysiloxane which is represented by the following formula (Me3SiO_{1/2})ₙ (Me₂ViSiO_{1/2})ₘ (SiO_{4/2})ᵣ, number-average molecular weight = 4300; approximate content of vinyl groups = 1.9 mass %; (n + m)/r = 0.71

Cyclic siloxane oligomer: cyclic methylvinylpolysiloxane; viscosity = 3.5 mPa·s; approximate content of vinyl groups = 30.7 mass %

Vinylsiloxane oligomer: a copolymer of a methylvinylsiloxane and dimethylsiloxane which has a viscosity of 20 mPa·s and is capped at both molecular terminals with dimethylhydroxysiloxy groups; content of vinyl groups = about 10.9 mass %

### [Practical Examples 2, 4 and 5 and Reference Examples 1 and 3]

Silicone-rubber compositions were prepared by uniformly mixing various components in the amounts shown in Table 2. Physical properties of the obtained silicone-rubber compositions, their adhesive strength, results of measurement of adhesive durability of hollow woven textile fabrics coated with silicone rubber are shown in Table 2.

### [Practical Example 8]

A silicone rubber composition was prepared in the same manner as in Reference Example 1, except that 1.2 parts of adhesion imparting agent AD-1 used in Reference Example 1 were replaced by 1.7 parts of AD-8..

### [Practical Examples 6 and 7, Comparative Examples 2 to 7]

A silicone rubber composition was prepared in the same manner as in Reference Example 1, except that adhesion promoting agent AD-1, which is used in the amount of 1.2 parts, was replaced by AD-2 to AD-10 used in the amounts shown in Table 3. The adhesive durability was measured by the methods described above for hollow woven textle fabrics coated with various silicone rubber compositions. The results are shown in Table 3.

**[Table 1]**

| | AD-1 | AD-2 | AD-3 | AD-4 | AD-5 | AD-6 | AD-7 | AD-8 | AD-9 | AD-10 |
|---|---|---|---|---|---|---|---|---|---|---|
| E (parts) | 0.6 | 0.6 | 0.6 | 0.6 | 0.6 | 0.6 | 0.6 | 0,6 | 0.6 | |
| G (parts) | 0.5 | 0.5 | 0.5 | 0.5 | 0.5 | 0.5 | 0.5 | 0.5 | | 0.5 |
| f-1 (parts) | 0.1 | | | | | | | 0.7 | 0.1 | 0.1 |
| f-2 (parts) | | 0.1 | | | | | | | | |
| m-1 (parts) | | | 0.1 | | | | | | | |
| m-2 (parts) | | | | 0.1 | | | | | | |
| m-3 (parts) | | | | | 0.1 | | | | | |
| m-4 (parts) | | | | | | 0.1 | | | | |

**[Table 2]**

| | | | Ref. Ex. 1 | Pr. Ex. 2 | Ref. Ex. 3 | Pr. Ex. 4 | Pr. Ex. 5 | Pr. Ex. 8 |
|---|---|---|---|---|---|---|---|---|
| Silica Master Batch | | | 48 | 61.5 | 52.5 | 65 | 60 | 48 |
| A-1 | a-1 | (parts) | 48 | 35 | 43.78 | 25 | 48 | 48 |
| | a-2 | (parts) | | | | | | |
| | a-3 | (parts) | | | | 3 | | |
| B | b-1 | (parts) | 21 | 1.5 | 0.23 | 1.9 | 2.1 | 2.1 |
| | b-2 | (parts) | | | 1.1 | 1.9 | | |
| | b-3 | (parts) | | | 0.18 | | | |
| C platinum type catalyst (parts) | | | 0.3 | 0.2 | 0.2 | 0.2 | 0.3 | 0.3 |
| Adhesion promoter AD-1 (parts) | | | 1.2 | 1.2 | 0.65 | 1.2 | 1.2 | |
| | | AD-8 | | | | | | 1.8 |
| (parts) | | | | | | | | |
| Curing inhibitor (parts) | | | 0.04 | 0.04 | 1 | 0.04 | 0.04 | 0.04 |
| Silicone resin (parts) | | | | | | | 8.5 | |
| Cyclic siloxane oligomer (parts) | | | 0.2 | 0.2 | 0.05 | 0.2 | | 0.2 |
| Vinyl siloxane oligomer (parts) | | | 0.3 | 0.15 | 0.1 | 0.15 | 0.15 | 0.3 |
| Viscosity | | Pa·s | 85 | 120 | 88 | 120 | 125 | 170 |
| Hardness | | | 26 | 29 | 18 | 27 | 26 | 27 |
| Density | | g/cm³ | 1.05 | 1.09 | 1.06 | 1.1 | 1.1 | 1.05 |
| Tensile Strength | | MPa | 6 | 10 | 5 | 10 | 8 | 6 |
| Relative elongation | | % | 830 | 940 | 1100 | 1000 | 650 | 680 |
| Adhesion dulability | | | | | | | | |
| | initial | | 5 | 5 | 5 | 5 | 5 | 5 |
| | after exposure to heat and | | 5 | 5 | 5 | 5 | 5 | 5 |
| | humidity | | | | | | | |
| Color change of the coating layer | | | passed | Passed | Passed | Passed | Passed | Did not pass |

**[Table 3]**

| | | Pr. Ex. 6 | Pr. Ex. 7 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|
| Adhesion promoter | | | | | | | | | |
| AD-2 | (parts) | 1.2 | | | | | | | |
| AD-3 | (parts) | | | 1.2 | | | | | |
| AD-4 | (parts) | | | | 1.2 | | | | |
| AD-5 | (parts) | | | | | 1.2 | | | |
| AD-6 | (parts) | | | | | | 1.2 | | |
| AD-7 | (parts) | | | | | | | 1.1 | |
| AD-9 | (parts) | | 0.7 | | | | | | |
| AD-10 | (parts) | | | | | | | | 0.6 |
| Adhesion durability | | | | | | | | | |
| Initial | | 5 | 5 | 3 | 3 | 1 | 1 | 3 | 1 |
| after exposure to heat | | 5 | 5 | 1 | 2 | 1 | 1 | 1 | 1 |
| and humidity | | | | | | | | | |

Comparison of Practical Examples 2, 4, 5 and 6 with Comparative Examples 4 and 5 shows that that the silicone-rubber composition for coating textile fabrics that contains methacryloxy-containing alkoxysilane (E), zirconium chelate compound (F), and epoxy-containing alkoxysilane (G) is superior to the silicone-rubber composition for coating textile fabrics that contains methacryloxy-containing alkoxysilane (E), and epoxy-containing alkoxysilane (G) and that contains an organic titanium compound instead of zirconium chelate compound (F), in its adhesion durability that remains excellent in the initial stage as well as after exposure to heat and humidity.

Comparison of Practical Examples 2, 4, 5 and 6 with Comparative Example 6 shows that that the silicone-rubber composition for coating textile fabrics that contains methacryloxy-containing alkoxysilane (E), zirconium chelate compound (F), and epoxy-containing alkoxysilane (G) is superior to the silicone-rubber composition for coating textile fabrics that contains methacryloxy-containing alkoxysilane (E), and epoxy-containing alkoxysilane (G) and that does not contain zirconium chelate compound (F), in its adhesion durability that remains excellent in the initial stage as well as after exposure to heat and humidity.

Comparison of Practical Examples 2, 4, 5 and 6 with Comparative Example 2 shows that the silicone-rubber composition for coating textile fabrics that contains methacryloxy-containing alkoxysilane (E), zirconium chelate compound (F), and epoxy-containing alkoxysilane (G) is superior to the silicone-rubber composition for coating textile fabrics that contains methacryloxy-containing alkoxysilane (E), and epoxy-containing alkoxysilane (G) and contains an organic zirconium compound instead of zirconium chelate compound (F), in its adhesion durability that remains excellent in the initial stage as well as after exposure to heat and humidity.

Comparison of Practical Examples 2, 4, 5 and 6 with Comparative Example 3 shows that the silicone-rubber composition for coating textile fabrics that contains methacryloxy-containing alkoxysilane (E), zirconium chelate compound (F), and epoxy-containing alkoxysilane (G) is superior to the silicone-rubber composition for coating textile fabrics that contains methacryloxy-containing alkoxysilane (E), and epoxy-containing alkoxysilane (G) and contains an aluminum chelate compound instead of zirconium chelate compound (F), in its adhesion durability that remains excellent in the initial stage as well as after exposure to heat and humidity.

Comparison of Reference Example 1 to Practical Example 8 shows that that the silicone-rubber composition for coating textile fabrics that contains zirconium chelate compound (F) in an appropriate amount, and epoxy-containing alkoxysilane (G) is superior to the silicone-rubber composition for coating textile fabrics that contains zirconium chelate compound in an excessive amount, in physical properties of the cured product of the composition and in appearance since the coating layer it is not subject to color change.

Comparison of Reference Example 1 to Comparative Example 7 shows that the silicone-rubber composition for coating textile fabrics that contains methacryloxy-containing alkoxysilane (E), zirconium chelate compound (F), and epoxy-containing alkoxysilane (G) is superior to the silicone-rubber composition for coating textile fabrics that does not contain methacryloxy-containing alkoxysilane (E), and contains zirconium chelate compound (F) and epoxy-containing alkoxysilane (G), in its adhesion durability that remains excellent in the initial stage as well as after exposure to heat and humidity.

### Industrial Applicability

The silicone-rubber composition of the present invention is suitable for use as a fabric coating composition since it allows the fabric to maintain a predetermined pressure over a relatively long time. Therefore, the composition can be used for coating textile fabrics utilized in the structure of vehicle side curtain airbags, aircraft emergency exit seats, inflatable rafts, or the like. The coated fabric of the presnt invention may find application in the structure of vehicle side curtain airbags, aircraft emergency exit seats, inflatable rafts, etc.

## Claims

1. A silicone-rubber composition for coating textile fabrics **characterized in that** the silicone-rubber composition is a solventless hydrosilylation reaction-curable composition, has a viscosity at 25°C in the range of 100 to 500 Pa.s, and contains an alkoxysilane that contains a methacrylic group or an acrylic group, reinforcing fine silica powder having a BET specific surface area equal to or greater than 50 m²/g and a zirconium chelate compound, but does not contain an organic titanium compound.

2. The silicone-rubber composition for coating textile fabrics of claim 1, further comprising an alkoxysilane that contains an epoxy group.

3. The silicone-rubber composition for coating textile fabrics of claim 2 that comprises the following components:
100 parts by mass of an alkenyl group-containing organopolysiloxane (A) that contains in one molecule at least two alkenyl groups and has a viscosity at 25°C in the range of 100 to 1,000,000 mPa.s;
an organohydrogenpolysiloxane (B) which is used in such an amount that the mole ratio of silicon-bonded hydrogen atoms of component (B) to alkenyl groups of component (A) ranges from (0.7 : 1.0) to (5.0 : 1.0);
a hydrosilylation catalyst (C) used in an amount sufficient for curing the composition;
0.1 to 50 parts by mass of a finely divided reinforcing silica (D) having a BET specific surface area equal or greater than 50 m²/g;
0.1 to 2 parts by mass of an alkokysilane that contains a methacryl group or an acryl group (E); and
0.01 to 0.5 parts by mass of a zirconium chelate compound (F).

4. The silicone-rubber composition for coating textile fabrics according to claim 3 that further includes an alkoxysilane that contains an epoxy group in an amount of 0.1 to 2 parts by mass for 100 parts by mass of component (A).

5. A textile fabric coated with the silicone-rubber composition for coating textile fabrics according to any claims from 1 to 4.

6. The textile fabric of claim 5, wherein the textile fabric has a hollow woven structure.

7. The textile fabric according to claims 5 or 6 used as a material for an airbag.

8. A method of manufacturing a coated textile fabric comprising the steps of applying the silicone-rubber composition for coating textile fabrics according to any claims 1 to 4 onto a textile fabric, and then forming a silicone-rubber coating layer by curing the aforementioned composition on the textile fabric.

9. The method of manufacturing a coated textile fabric according to claim 8, wherein the textile fabric has a hollow woven structure.

## Patentansprüche

1. Siliconkautschukzusammensetzung zur Beschichtung von Textilgeweben, **dadurch gekennzeichnet, dass** die Siliconkautschukzusammensetzung eine lösungsmittelfreie durch Hydrosilylierungsreaktion härtbare Zusammensetzung ist, eine Viskosität bei 25°C im Bereich von 100 bis 500 Pa.s aufweist und ein Alkoxysilan, das eine Methacrylgruppe oder eine Acrylgruppe enthält, verstärkendes feines Siliciumdioxidpulver mit einer spezifischen BET-Oberfläche von größer oder gleich 50 m²/g und eine Zirconiumchelatverbindung enthält, aber keine organische Titanverbindung enthält.

2. Siliconkautschukzusammensetzung zur Beschichtung von Textilgeweben nach Anspruch 1, die ferner ein Alkoxysilan, das eine Epoxygruppe enhält, enthält.

3. Siliconkautschukzusammensetzung zur Beschichtung von Textilgeweben nach Anspruch 2, die die folgenden Komponenten enthält:
100 Masseteile eines alkenylgruppenhaltigen Organopolysiloxans (A), das in einem Molekül mindestens zwei Alkenylgruppen enthält und eine Viskosität bei 25°C im Bereich von 100 bis 1.000.000 mPa·s aufweist; ein Organowasserstoffpolysiloxan (B), das in einer solchen Menge verwendet wird, dass das Molverhältnis von siliciumgebundenen Wasserstoffatomen der Komponente (B) zu Alkenylgruppen der Komponente (A) von 0,7:1,0 bis 5,0:1,0 reicht;
einen Hydrosilylierungskatalysator (C), der in einer Menge verwendet wird, die ausreichend ist, um die Zusammensetzung zu härten;
0,1 bis 50 Masseteile eines fein verteilten verstärkenden Siliciumdioxids (D) mit einer spezifischen BET-Oberfläche von größer oder gleich 50 m²/g;
0,1 bis 2 Masseteile eines Alkoxysilans, das eine Methacrylgruppe oder eine Acrylgruppe enthält (E), und
0,01 bis 0,5 Masseteile einer Zirconiumchelatverbindung (F).

4. Siliconkautschukzusammensetzung zur Beschichtung von Textilgeweben nach Anspruch 3, die ferner ein Alkoxysilan, das eine Epoxygruppe enhält, in einer Menge von 0,1 bis 2 Masseteilen pro 100 Masseteile Komponente (A) enthält.

5. Textilgewebe, das mit der Siliconkautschukzusammensetzung zur Beschichtung von Textilgeweben nach einem der Ansprüche 1 bis 4 beschichtet ist.

6. Textilgewebe nach Anspruch 5, wobei das Textilgewebe eine hohle gewebte Struktur hat.

7. Textilgewebe nach Anspruch 5 oder 6, das als Material für einen Airbag verwendet wird.

8. Verfahren zur Herstellung eines beschichteten Textilgewebes, umfassend die Schritte des Aufbringens der Siliconkautschukzusammensetzung zur Beschichtung von Textilgeweben nach einem der Ansprüche 1 bis 4 auf ein Textilgewebe und dann Bilden einer Siliconkautschukbeschichtungsschicht durch Härten der zuvor erwähnten Zusammensetzung auf dem Textilgewebe.

9. Verfahren zur Herstellung eines beschichteten Textilgewebes nach Anspruch 8, wobei das Textilgewebe eine hohle gewebte Struktur hat.

## Revendications

1. Composition de caoutchouc silicone pour l'enduction de tissu **caractérisée en ce que** la composition de caoutchouc silicone est une composition durcissable par réaction d'hydrosilylation sans solvant, a une viscosité à 25 °C dans la plage de 100 à 500 Pa.s, et contient un alcoxysilane qui contient un groupe méthacrylique ou un groupe acrylique, une poudre de silice fine renforçante présentant une surface spécifique BET supérieure ou égale à 50 m²/g et un composé chélate de zirconium, mais ne contient pas de composé organique à base de titane.

2. Composition de caoutchouc silicone pour l'enduction de tissu selon la revendication 1, comprenant en outre un alcoxysilane qui contient un groupe époxy.

3. Composition de caoutchouc silicone pour l'enduction de tissu selon la revendication 2, qui comprend les composants suivants :
100 parties en masse d'un organopolysiloxane contenant des groupes alcényles (A) qui contient par molécule au moins deux groupes alcényles et qui a une viscosité à 25 °C dans la plage de 100 à 1 000 000 mPa.s ;
un organohydrogénopolysiloxane (B) qui est utilisé en une quantité telle que le rapport molaire des atomes d'hydrogène liés au silicium du composant (B) aux groupes alcényles du composant (A) varie de (0,7/ 1,0) à (5,0/ 1,0) ;
un catalyseur d'hydrosilylation (C) utilisé en une quantité suffisante pour durcir la composition ;
de 0,1 à 50 parties en masse d'une silice renforçante finement divisée (D) présentant une surface spécifique BET supérieure ou égale à 50 m²/g ;
de 0,1 à 2 parties en masse d'un alcoxysilane qui contient un groupe méthacryle ou un groupe acryle (E) ; et
de 0,01 à 0,5 partie en masse d'un composé chélate de zirconium (F).

4. Composition de caoutchouc silicone pour l'enduction de tissu selon la revendication 3, qui comprend en outre un alcoxysilane qui contient un groupe époxy en une quantité de 0,1 à 2 parties en masse pour 100 parties en masse du composant (A).

5. Tissu enduit avec la composition de caoutchouc silicone pour l'enduction de tissu selon l'une quelconque des revendications 1 à 4.

6. Tissu selon la revendication 5, le tissu présentant une structure tissée en creux.

7. Tissu selon les revendications 5 ou 6 utilisé en tant que matériau pour un airbag.

8. Procédé de fabrication d'un tissu enduit comprenant les étapes consistant à appliquer la composition de caoutchouc silicone pour l'enduction de tissu selon l'une quelconque des revendications 1 à 4 sur un tissu, puis à former une couche de revêtement de caoutchouc silicone en durcissant la composition mentionnée ci-dessus sur le tissu.

9. Procédé de fabrication d'un tissu enduit selon la revendication 8, dans lequel le tissu présente une structure tissée en creux.
